(19) Europäisches Patentamt
European Patent Office
Office européen des brevets

(11) **EP 3 851 573 A1**

(12) **EUROPEAN PATENT APPLICATION**
published in accordance with Art. 153(4) EPC

(43) Date of publication:
**21.07.2021 Bulletin 2021/29**

(51) Int Cl.:
**D06N 3/00** (2006.01)          **B32B 27/12** (2006.01)
**B32B 27/40** (2006.01)          **D06N 3/14** (2006.01)

(21) Application number: **19859696.7**

(22) Date of filing: **05.08.2019**

(86) International application number:
**PCT/JP2019/030739**

(87) International publication number:
**WO 2020/054256 (19.03.2020 Gazette 2020/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **14.09.2018 JP 2018172233**

(71) Applicant: **Asahi Kasei Kabushiki Kaisha**
**Tokyo 1000006 (JP)**

(72) Inventors:
• **HIRONAKA, Daisuke**
  **Tokyo 100-0006 (JP)**

• **TADOKORO, Yoshiyuki**
  **Tokyo 100-0006 (JP)**
• **SAKATA, Keiichiro**
  **Tokyo 100-0006 (JP)**
• **UMEMOTO, Hiroki**
  **Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **ARTIFICIAL LEATHER AND METHOD FOR MANUFACTURING SAME**

(57)     An artificial leather is provided that, due to excellent texture and mechanical strength (abrasion resistance, etc.), can be appropriately used in, for example, clothing products, or sheets of skin material or interior material, etc. for interiors, automobiles, airplanes, rail cars, etc. One embodiment of the present invention is an artificial leather that includes a fiber sheet and a polyurethane resin, wherein the fiber sheet includes a scrim that is a woven or knitted fabric, and a fiber layer (A) that constitutes a first outer surface of the artificial leather, such that in a thickness direction cross-section of the fiber layer (A), the ratio (d/D) of the total area (d) of the polyurethane resin that forms a closed shape having an area of 100 $\mu$m2 or more to the total area (D) of the polyurethane resin satisfies the following formula (1): $5 \leq (d/D) \times 100 \leq 50$ (%).

FIG. 1

EP 3 851 573 A1

**Description**

FIELD

The present invention relates to an artificial leather which is excellent in texture and mechanical strength (abrasion resistance, etc.).

BACKGROUND

Artificial leathers which are mainly composed of a fibrous substrate such as a nonwoven fabric and a polyurethane resin have excellent features such as easy care, functionality, and homogeneity that are difficult to achieve with natural leather, and are suitably used for clothing, shoes, and bags, as well upholstery and interior materials for seats for interior, automobiles, aircraft, trains, and clothing materials such as ribbon and patch base materials.

As a method for producing such an artificial leather, conventionally, a method in which a fibrous substrate is impregnated with an organic solvent solution of a polyurethane resin, and thereafter immersing the fibrous substrate in a polyurethane resin antisolvent (e.g., water or an organic solvent) to wet-coagulate the polyurethane resin is generally used. In this method, a water-miscible organic solvent, such as N,N-dimethylformamide, is used as an organic solvent, which is a solvent for polyurethane resins. However, since organic solvents are generally highly harmful to the human body and the environment, there is a strong demand for a method for producing an artificial leather in which an organic solvent is not used.

For example, in Patent Document 1, a non-organic solvent method comprising using a resin of a sea component of sea-island type composite fibers to restrain a part of the ultrafine fibers substantially without using a polyurethane resin has been proposed. Further, Patent Documents 2 to 4 describe methods of using a water-dispersed polyurethane resin comprising a polyurethane resin dispersed in water, instead of conventional organic solvent-based polyurethane resins.

[CITATION LIST]

[PATENT LITERATURE]

[PTL 1] Japanese Unexamined Patent Publication (Kokai) No. 2007-224481
[PTL 2] WO 2015/129602
[PTL 3] Japanese Unexamined Patent Publication (Kokai) No. 2017-137588
[PTL 4] Japanese Unexamined Patent Publication (Kokai) No. 2013-234409

SUMMARY

[TECHNICAL PROBLEM]

However, in the fiber sheet obtained by tracing the method described in the Examples of Patent Document 1, since a polyurethane resin is substantially not used, the surface quality and texture are not sufficient, and in particular, there is a problem in that light fastness, texture, etc., are insufficient due to the presence of sea components, which are inferior in durability and elasticity. Furthermore, in the method described in Patent Document 2, though it is considered that the porous structure of the polyurethane resin can be achieved and the texture can be improved to some extent by coagulating the water-dispersed polyurethane resin in hot water, it is difficult to say that the excellent texture required by the market is satisfied, and there is room for improvement in terms of flexibility. In addition, the method described in Patent Document 2 has a problem in that the process is unstable, because the hot water in the coagulation bath can be contaminated with a part of the polyurethane resin. The method described in Patent Document 3 has a problem in that the area ratio of the polyurethane resin on the outer surface is low, whereby roughness occurs. In the method described in Patent Document 4, since polyvinyl alcohol is not added during impregnation with an aqueous polyurethane resin solution, the polyurethane resin often has a closed shape in a thickness direction cross-section, and there is a problem in that mechanical strength is inferior.

The object to be achieved by an aspect of the present invention is to provide an artificial leather which has excellent texture and mechanical strength (abrasion resistance), whereby it can be suitably used as a clothing product as well upholstery and interior materials for seats for interior, automobiles, aircraft, and trains.

[SOLUTION TO PROBLEM]

As a result of rigorous investigation, the present inventors have discovered that an artificial leather having the following properties can solve the above problems, and have completed the present invention.

In other words, the present invention encompasses the following aspects.

[1] An artificial leather comprising a fiber sheet and a polyurethane resin, wherein
the fiber sheet includes a scrim, which is a woven or knitted fabric, and a fiber layer (A) constituting a first outer surface of the artificial leather, and
in a thickness direction cross-section of the fiber layer (A), the ratio (d/D) of the total area (d) of a polyurethane resin forming a closed shape having an area of 100 $\mu$m$^2$ or more to the total area (D) of the polyurethane resin satisfies the following formula (1):

$$5 \le (d/D) \times 100 \le 50\ (\%)\ \ (1).$$

[2] The artificial leather according to aspect 1, wherein in a thickness direction cross-section of the fiber layer (A), the average area of the closed shape formed by the polyurethane resin is 3 $\mu$m$^2$ to 18 $\mu$m$^2$.
[3] The artificial leather according to aspect 1 or 2, wherein an area ratio of the polyurethane resin in the first outer surface is 6.5% or less.
[4] The artificial leather according to any one of aspects 1 to 3, wherein the fiber sheet has a three-layer structure composed of:

a fiber layer (A) constituting a first outer surface of the artificial leather,
a fiber layer (B) constituting a second outer surface of the artificial leather, and
a scrim arranged between the fiber layer (A) and the fiber layer (B).

[5] The artificial leather according to any one of aspects 1 to 4, wherein at least the fiber layer (A) is composed of fibers having an average diameter of 1 $\mu$m to 8 $\mu$m.
[6] The artificial leather according to any one of aspects 1 to 5, wherein at least the fiber layer (A) is composed of fibers dispersed substantially in a single fiber form.
[7] The artificial leather according to any one of aspects 1 to 6, wherein the ratio of the polyurethane resin to 100% by mass of the fiber sheet is 5% by mass to 20% by mass.
[8] The artificial leather according to any one of aspects 1 to 7, wherein a flexibility thereof is 28 cm or less.
[9] The artificial leather according to any one of aspects 1 to 8, wherein the polyurethane resin is a water-dispersed polyurethane resin.
[10] A method for the production of the artificial leather according to any one of aspects 1 to 9, comprising:

a fiber sheet production step in which the fiber sheet comprising the scrim and the fiber layer (A) is produced, and
a resin filling step in which the fiber sheet is filled with a polyurethane resin, wherein
in the fiber sheet production step, at least the fiber layer (A) is produced by a papermaking method.

[11] The method according to aspect 10, further comprising, prior to the resin filling step, a step in which an outer surface of the fiber layer (A) of the fiber sheet is coated with a hot-water-soluble resin aqueous solution and thereafter dried.

[ADVANTAGEOUS EFFECTS OF INVENTION]

According to an aspect of the present invention, an artificial leather having an excellent texture and mechanical strength (abrasion resistance) as well as a production method therefor, can be provided.

BRIEF DESCRIPTION OF DRAWINGS

[FIG. 1] FIG. 1 is a conceptual diagram showing a structural example of a fiber sheet.
[FIG. 2] FIG. 2 is a conceptual diagram detailing the method for determining fiber diameter.
[FIG. 3A] FIG. 3A is a view showing an SEM image of the outer surface of the fiber layer (A) of Example 1.

[FIG. 3B] FIG. 3B is a view showing an image after marking of the SEM image shown in FIG. 3A.
[FIG. 3C] FIG. 3C is an enlarged view of parts of FIG. 3A and FIG. 3B.
[FIG. 3D] FIG. 3D is a view showing an image after color threshold processing of FIG. 3B.
[FIG. 3E] FIG. 3E is a view showing an image after binarization of the image shown in FIG. 3D.

DESCRIPTION OF EMBODIMENTS

Though the embodiments of the present invention are described in detail below, the present invention is not limited to these embodiments. Furthermore, unless otherwise specified, the various values in the present disclosure are values obtained by the methods described in the [Examples] section of the present disclosure or methods understood by a those skilled in the art to be equivalent thereto.

<Artificial Leather>

An aspect of the present invention provides an artificial leather comprising a fiber sheet and a polyurethane resin. The fiber sheet includes a scrim, which is a woven or knitted fabric, and a fiber layer (A) constituting a first outer surface of the artificial leather. In an aspect, in a thickness direction cross-section of the fiber layer (A), the ratio (d/D) of the total area (d) of a polyurethane resin forming a closed shape having an area of 100 $\mu m^2$ or more to the total area (D) of the polyurethane resin satisfies the following formula (1):

$$5 \leq (d/D) \times 100 \leq 50\,(\%)\ \ (1).$$

In the present disclosure, the phrase "artificial leather" means "a material in which a special nonwoven fabric (primarily a fiber layer having a random three-dimensional structure which is impregnated with polyurethane or an elastomer having comparable flexibility) is used as a base material in accordance with the Household Goods Quality Labeling Act." Furthermore, in the JIS-6601 standard, artificial leathers are classified into those which are "smooth" having a leather grain-like appearance and those which are "nap" having the appearance of suede or velour, depending on appearance. However, the artificial leather of the present disclosure relates to what is classified as "nap" (i.e., a suede-like artificial leather having a brushed appearance). A suede-like appearance can be achieved by subjecting the outer surface of a fiber layer (A) (i.e., a surface serving as a first outer surface of the artificial leather) to a buffing process with sandpaper or the like. Note that, in the present disclosure, the first outer surface of the artificial leather is the surface exposed to the outside when the artificial leather is used (e.g., the surface on the side which contacts with a human body in the case of chair applications). In one aspect, in the case of suede-like artificial leather, the first outer surface is raised or napped by buffing or the like.

In the present disclosure, the phrase "closed shape" of a polyurethane resin in a thickness direction cross-section of the fiber layer (A) means a shape in which the cross-section is observed with a scanning electron microscope (SEM), and when an arbitrary point on a contour of a morphological image of the polyurethane resin is taken as a starting point and a line is extended along the contour from the starting point, the line returns to the starting point.

One of the important features of one aspect of the present invention is the filling state of the polyurethane resin relative to the fiber sheet. In order to achieve both mechanical strength such as abrasion resistance and texture at high levels, the ratio ((d/D) × 100 (%)) of a total area (d) occupied by the polyurethane resin present in a closed shape having an area of 100 $\mu m^2$ or more among a total area (D) occupied by the polyurethane resin in a cross-section in the thickness direction of at least the fiber layer (A) is 5 to 50%. The ratio (d/D) is an indicator of the ratio of the portion of the polyurethane resin distributed in artificial leather at large sizes. When the above ratio is 50% or less, since the polyurethane resin is filled in the fiber sheet as fine state, the degree of freedom of bending between the fibers constituting the fiber layer (A) and the scrim increases, whereby the texture becomes soft. Furthermore, when the above ratio is 5% or more, since the polyurethane resin sufficiently holds the fibers of the fiber layer (A) with each other (i.e., sufficiently functions as a binder between fibers), sufficient mechanical strength (abrasion resistance, etc.) satisfying the market needs is obtained. The above ratio is preferably 5% to 35%, and more preferably 8% to 25%.

The average area of the polyurethane resin forming a closed shape in the thickness direction cross-section of the fiber layer (A) (also referred to as the "average size of the polyurethane resin" in the present disclosure) is preferably 3 $\mu m^2$ to 18 $\mu m^2$. When the average size of the polyurethane resin is 3 $\mu m^2$ or more, the polyurethane resin serves as a binder between fibers constituting the fiber layer (A), whereby an artificial leather having excellent mechanical strength such as a flexible texture and abrasion resistance can easily be obtained. Conversely, when the average size of the polyurethane resin is 18 $\mu m^2$ or less, since the number of holding points of the fibers constituting the fiber layer (A) by the polyurethane resin is increased, an artificial leather having excellent mechanical strength, abrasion resistance, and a flexible texture can easily be obtained. The average size of the polyurethane is preferably 4 $\mu m^2$ to 15 $\mu m^2$, and more

preferably 4 $\mu m^2$ to 12 $\mu m^2$.

An example of a method for controlling the above ratio (d/D) and the average size of the polyurethane resin include controlling the form of the polyurethane resin at the time of filling into the fiber sheet (e.g., controlling the average primary particle diameter of the polyurethane resin in the polyurethane resin dispersion, adding a small amount of a water-soluble resin such as polyvinyl alcohol in the impregnation liquid, and controlling the ratio of the polyurethane resin to the fiber sheet).

The ratio of the polyurethane resin to 100% by mass of the fiber sheet is preferably 5% by mass to 20% by mass. The ratio of the polyurethane resin to the fiber sheet affects the ratio (d/D) of the present disclosure and the controllability of the average area (average size of the polyurethane resin) of the polyurethane resin forming a closed shape in the thickness direction cross-section of the fiber layer (A). When the ratio of the polyurethane resin is low, the ratio (d/D) tends to be low, and the average size of the polyurethane resin tends to be small. Conversely, when the ratio of the polyurethane resin is high, the ratio (d/D) tends to be high, and the average size of the polyurethane resin tends to be large. When the ratio of the polyurethane resin to the fiber sheet is 5% by mass or more, the fibers are well held by the polyurethane resin, and mechanical strength such as abrasion resistance satisfying the market need is easily obtained. Conversely, when the ratio of the polyurethane resin to the fiber sheet is 20% by mass or less, a flexible texture is easily obtained. The ratio of the polyurethane resin to the fiber sheet is more preferably 6% by to 17% by mass, and furthermore preferably 6% by mass to 15% by mass.

[Polyurethane Resin]

As the polyurethane resin used in the present invention, those obtained by reacting a polymer diol with an organic diisocyanate and a chain extender are preferred.

As the polymer diol, for example, polycarbonate-based, polyester-based, polyether-based, silicone-based, and fluorine-based diols can be used, and a copolymer obtained by combining two or more of these may be used. From the viewpoint of hydrolysis resistance, a polycarbonate-based or polyether-based diol or a combination thereof is preferably used. Furthermore, from the viewpoint of light resistance and heat resistance, a polycarbonate-based or polyester-based diol or a combination thereof is preferably used. Furthermore, from the viewpoint of cost competitiveness, a polyether-based or polyester-based diol or a combination thereof is preferably used.

The polycarbonate-based diol can be produced by transesterification reaction of an alkylene glycol with a carbonic ester or reaction of a phosgene or a chloroformate with an alkylene glycol.

Examples of the alkylene glycol include linear alkylene glycols such as ethylene glycol, propylene glycol, 1,4-butanediol, 1,5-pentanediol, 1,6-hexanediol, 1,9-nonanediol, and 1,10-decanediol; branched alkylene glycols such as neopentyl glycol, 3-methyl-1,5-pentanediol, 2,4-diethyl-1,5-pentanediol, and 2-methyl-1,8-octanediol; alicyclic diols such as 1,4-cyclohexanediol; and aromatic diols such as bisphenol A; and combinations of one or two or more of these can be used.

Examples of the polyester-based diol include polyester diols obtained by condensing various low molecular weight polyols and polybasic acids.

The low molecular weight polyol may be, for example, one or more selected from ethylene glycol, 1,2-propylene glycol, 1,3-propylene glycol, 1,3-butanediol, 1,4-butanediol, 2,2-dimethyl-1,3-propanediol, 1,6-hexanediol, 3-methyl-1,5-pentanediol, 1,8-octanediol, diethylene glycol, triethylene glycol, dipropylene glycol, tripropylene glycol, cyclohexane-1,4-diol, and cyclohexane-1,4-dimethanol. Furthermore, adducts obtained by adding various alkylene oxides to bisphenol A can be used.

Examples of the polybasic acid includes one or more selected from the group consisting of succinic acid, maleic acid, adipic acid, glutaric acid, pimelic acid, suberic acid, azelaic acid, sebacic acid, dodecanedicarboxylic acid, phthalic acid, isophthalic acid, terephthalic acid, and hexahydroisophthalic acid.

Examples of the polyether-based diol include polyethylene glycol, polypropylene glycol, polytetramethylene glycol, or copolymerized diols in which these are combined.

The number average molecular weight of the polymer diol is preferably 500 to 4000. By setting the number average molecular weight to 500 or more, more preferably 1500 or more, it is possible to prevent a hard texture. Further, by setting the number average molecular weight to 4000 or less, more preferably 3000 or less, the strength of the polyurethane resin can be maintained.

Examples of the organic diisocyanate include aliphatic diisocyanates such as hexamethylene diisocyanate, dicyclohexylmethane diisocyanate, isophorone diisocyanate, and xylylene diisocyanate; and aromatic diisocyanates such as diphenylmethane diisocyanate and tolylene diisocyanate; and these may be used in combination. Among these, aliphatic diisocyanates such as hexamethylene diisocyanate, dicyclohexylmethane diisocyanate, and isophorone diisocyanate are preferably used from the viewpoint of light resistance.

An amine-based chain extender such as ethylenediamine or methylene bisaniline or a diol-based chain extender such as ethylene glycol can be used as the chain extender. Furthermore, a polyamine obtained by reacting a polyisocyanate with water can also be used as the chain extender.

Furthermore, the polyurethane resin can be used in the form of a solvent-type polyurethane resin in which a polyurethane resin is dissolved in an organic solvent such as N,N-dimethylformamide, or a water-dispersed polyurethane resin in which a polyurethane resin is emulsified with an emulsifier and dispersed in water. Among these, a water-dispersed polyurethane resin is preferred from the viewpoint that the polyurethane resin can easily be filled into a fiber sheet in a fine form, the required performance as an artificial leather such as texture and mechanical properties can easily obtained even when a small amount of adheres thereto, and environmental impact can be reduced without requiring the use of an organic solvent. In other words, since the fiber sheet can be impregnated with the water-dispersed polyurethane resin in the form of a dispersion in which the polyurethane resin is dispersed at a desired particle diameter, the filling form of the polyurethane resin in the fiber sheet can be easily controlled by controlling the particle diameter.

A self-emulsifying type polyurethane resin containing a hydrophilic group in the polyurethane molecule or a forced-emulsifying type polyurethane resin obtained by emulsifying a polyurethane resin with an external emulsifier can be used as the water-dispersed polyurethane resin.

In the water-dispersed polyurethane resin, a crosslinking agent can be used in combination for the purpose of improving durability such as wet-heat resistance, abrasion resistance, and hydrolysis resistance. Adding a crosslinking agent is preferable to improve durability at the time of jet dyeing processing, to suppress fiber shedding, and to obtain excellent surface quality. The crosslinking agent may be an external crosslinking agent added as an additive component to the polyurethane resin, or may be an internal crosslinking agent for introducing a reaction group capable of taking a crosslinked structure in the polyurethane resin structure in advance.

Since the water-dispersed polyurethane resins used in artificial leathers generally have a crosslinked structure in order to provide dyeing processing resistance, they tend to be difficult to dissolve in an organic solvent such as N,N-dimethylformamide. Thus, when, for example, the artificial leather is immersed in a N,N-dimethylformamide for 12 hours at room temperature and then subjected to a dissolution treatment of the polyurethane resin, and thereafter a cross-section is observed with an electron microscope, if a resin-like material having no fiber shape remains, it can be determined that the resin-like material is a water-dispersed polyurethane resin.

In a preferred embodiment, from the viewpoint of easily controlling the above ratio (d/D) and from the viewpoint of easily controlling the average size of the polyurethane resin, filling of the polyurethane resin is performed using a polyurethane resin dispersion, and at that time, the average primary particle diameter of the polyurethane resin in the dispersion is set to 0.1 $\mu$m to 0.8 $\mu$m. Note that the average primary particle diameter is a value obtained by measuring the polyurethane resin dispersion with a laser diffraction-type particle size distribution measuring device ("LA-920" manufactured by HORIBA). By setting the average primary particle diameter of the polyurethane resin to 0.1 $\mu$m or more, the ratio (d/D) can easily be controlled to 5% or more, and further, it can be easy to set the average size of the polyurethane resin to 3 $\mu$m$^2$ or more, whereby an artificial leather having excellent mechanical strength is obtained whose holding force (i.e., binding force) between the fibers in the fiber sheet by the polyurethane resin is satisfactory. Further, by setting the average primary particle diameter of the polyurethane resin to 0.8 $\mu$m or less, coagulation or coarsening of the polyurethane resin is suppressed, and the ratio (d/D) can be easily controlled to 50% or less. Furthermore, it is also advantageous to set the average primary particle diameter of the polyurethane resin to 0.8 $\mu$m or less in terms of controlling the average area of the polyurethane resin in the thickness direction cross-section of the fiber layer (A) to 18 $\mu$m$^2$ or less (i.e., preventing coagulation or coarsening of the polyurethane resin). By setting the average primary particle diameter of the polyurethane resin in the polyurethane resin dispersion to 0.1 $\mu$m to 0.8 $\mu$m, a large number of fibers constituting the artificial leather (particularly, the surface layer thereof) are held each other, whereby a flexible texture and excellent mechanical strength (abrasion resistance, etc.) can be obtained. The average primary particle diameter of the polyurethane resin is preferably 0.1 $\mu$m to 0.6 $\mu$m, and more preferably 0.2 $\mu$m to 0.5 $\mu$m.

When a fiber sheet is filled with a polyurethane resin by impregnating the fiber sheet with an impregnation liquid containing the polyurethane resin, it is preferable to add a small amount of a water-soluble resin such as polyvinyl alcohol, polyacrylamide, or carboxy methylcellulose to the impregnation liquid to control the state of adhesion of the polyurethane resin to the fibers constituting the fiber sheet. By eluting and removing the water-soluble resin using hot water in a dyeing step or another subsequent step, the effect of dividing a portion of the continuous layer of the polyurethane resin to make the adhesion state of the polyurethane resin finer is obtained. Though the addition concentration of the water-soluble resin may be appropriately determined depending on the type of polyurethane resin used, when, for example, a polyvinyl alcohol resin is used, the concentration is preferably 0.5% by mass to 5% by mass based on the total impregnation liquid. When the concentration of the polyvinyl alcohol resin is 0.5% by mass or more, the generation of polyurethane resin exhibiting an area of 100 $\mu$m$^2$ or more in a thickness direction cross-section of the fiber layer (A) tends to be suppressed, and the ratio (d/D $\times$ 100%) of the total area (d) of a polyurethane resin having an area of 100 $\mu$m$^2$ or more with respect to the total area (D) of the polyurethane resin in the cross-section can be easily controlled to 50% or less. Conversely, by setting the concentration of the polyvinyl alcohol resin to 5% by mass or less, the mechanical strength of the polyurethane resin itself is unlikely to be reduced, and adhesion between the polyurethane resin and the fibers constituting the artificial leather is unlikely to be prevented, which is preferable. A polyvinyl alcohol concentration is more preferably 0.6% by mass to 2.5% by mass, and further preferably 0.7% by mass to 1.4% by mass.

Additives such as a stabilizer (an ultraviolet absorber, an antioxidant, or the like), a flame retardant, an antistatic agent, or a pigment (such as carbon black) may be added to an impregnation liquid containing the polyurethane resin (e.g., a water-dispersed polyurethane resin) if necessary. The total amount of these additives present in the artificial leather may be, for example, 0.1 to 10.0 parts by mass, 0.2 to 8.0 parts by mass, or 0.3 to 6.0 parts by mass with respect to 100 parts by mass of the polyurethane resin. Note that such additives will be distributed in the polyurethane resin of artificial leather. In the present disclosure, values when referring to the size of the polyurethane resin and the mass ratio of the polyurethane resin to the fiber sheet are intended to include the additives (if used).

[Fiber Sheet]

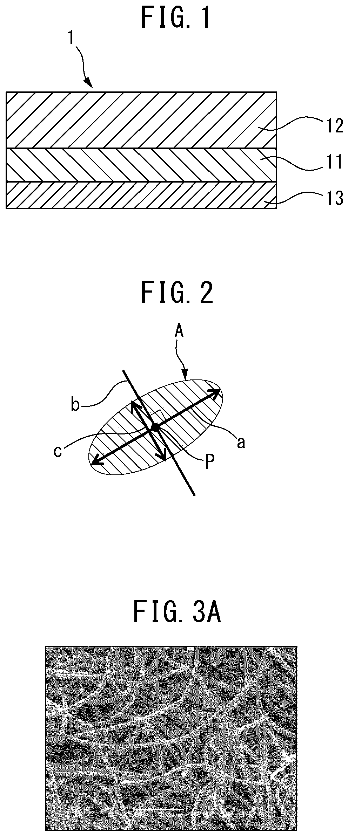

Referring to FIG. 1, the fiber sheet 1 includes a scrim 11, which is a woven or knitted fabric, and a fiber layer (A) 12. When the fiber sheet has at least these two layers, excellent mechanical strength such as dimensional stability and tensile strength can be provided, even if the filling state of the polyurethane resin is fine.

In an aspect of the present invention, preferably, the fiber sheet has a three-layer structure and the scrim is an intermediate layer. Referring to FIG. 1, for example, a three-layer structure in which the scrim 11 as a woven or knitted fabric is interposed between the fiber layer (A) 12 constituting a first outer surface of the artificial leather and the fiber layer (B) 13 constituting the second outer surface of the artificial leather, and fibers are entangled between these layers is particularly preferable in terms of dimensional stability, tensile strength, and tear strength. Furthermore, the three-layer structure including the fiber layer (A), the fiber layer (B), and the scrim interposed therebetween is preferable, since the fiber layer (A) and the fiber layer (B) can be individually designed, whereby the diameter, the type, and the sort of the fibers constituting these layers can be customized according to the function and the application required for the artificial leather. For example, when ultrafine fibers are used for the fiber layer (A) and flame-retardant fibers are used for the fiber layer (B), compatibility between excellent surface quality and high flame retardancy can be achieved.

When the fiber sheet contains a scrim, it is preferable that the scrim, which is a woven or knitted fabric, be of the same polymer system as the fibers constituting the fiber layer (A) from the viewpoint of color unification by dyeing. For example, if the fibers constituting the fiber layer (A) are polyester-based, the fibers constituting the scrim are also preferably polyester-based, and if the fibers constituting the fiber layer (A) are polyamide-based, the fibers constituting the scrim are also preferably polyamide-based. In the case in which the scrim is a knitted fabric, the scrim is preferably a single knit knitted at 22 gauge to 28 gauge. When the scrim is a woven fabric, higher dimensional stability and strength than a knitted fabric can be realized. The structure of the woven fabric may be plain weave, twill weave, or satin weave, and plain weave is preferred from the viewpoint of cost, entanglement, etc.

The yarn constituting the woven fabric may be a monofilament or a multifilament. The single fiber fineness of the yarn is preferably 5.5 dtex or less from the viewpoint that a flexible artificial leather can be easily obtained. As the form of the yarn constituting a woven fabric, a yarn obtained by twisting a raw yarn of a multifilament such as polyester or polyamide or a machining yarn subjected to a false twisting treatment at a twist number of 0 to 3000 T/m is preferred. The multifilament may be conventional, and, for example, a 33 dtex/6 f, 55 dtex/24 f, 83 dtex/36 f, 83 dtex/72 f, 110 dtex/36 f, 110 dtex/48 f, 167 dtex/36 f, 166 dtex/48 f polyester or polyamide is preferably used. The yarn constituting the woven fabric may be a long fiber of a multifilament. The woven density of yarns in the woven fabric is preferably 30 to 150 yarns per inch, and more preferably 40 to 100 yarns per inch, in terms of obtaining an artificial leather which is flexible and excellent in mechanical strength. In order to impart suitable mechanical strength and a moderate texture, the basis weight of the woven fabric is preferably 20 to 150 g/m$^2$. Note that the presence or absence of false twisting machining in the woven fabric, the number of twists, the single fiber fineness of the multifilament, and the weave density contribute to mechanical properties such as stitch strength, tear strength, tensile strength, stretchability, and elasticity in addition to entanglement of the fibers constituting the fiber layer (A) and the fibers constituting the fiber layer (B), which is an optional layer, and the flexibility of the artificial leather, and may be appropriately selected according to the desired physical properties and application.

In an aspect of the present invention, the area ratio of the polyurethane resin on the first outer surface of the artificial leather is preferably 0% to 6.5%. The area ratio is a value calculated by observing the first outer surface with a scanning electron microscope (SEM) at a magnification of 500x using the obtained SEM image. When the area ratio is 6.5% or less, the amount of the polyurethane resin exposed on the first outer surface, which causes "roughness" when the first outer surface is touched, is reduced, and since the degree of freedom of the fibers forming the nap is not reduced, the fibers conform when the first outer surface is stroked in the horizontal direction, which brings about a "smooth" texture, i.e., a high so-called "surface quality". The area ratio of the polyurethane resin on the first outer surface is more preferably 3.5% or less, and further preferably 2% or less. The area ratio may be, for example, 0.1% or more, or 0.5% or more, from the viewpoint of ease of production of the artificial leather.

It is preferable that at least the fiber layer (A) of the artificial leather be composed of fibers having an average diameter of 1 μm to 8 μm. When the average diameter of the fibers is 1 μm or more, abrasion resistance, color developability by dyeing, and light fastness become suitable. Furthermore, when the average diameter of the fibers is 8 $\mu$m or less, since the number density of the fibers is large, an artificial leather having high denseness, smooth surface texture, and superior surface quality can be obtained. From the viewpoint of obtaining an artificial leather which combines abrasion resistance, dyeability, and surface quality at higher levels, the average diameter of the fibers constituting the fiber layer (A) is more preferably 2 $\mu$m to 6 $\mu$m, and further preferably 2 $\mu$m to 5 $\mu$m.

As the fibers constituting the fiber layers (the fiber layer (A), and the fiber layer (B) and the additional layer as optional layers) constituting the artificial leather, synthetic fibers including polyester-based fibers such as polyethylene terephthalate, polybutylene terephthalate, and polytrimethylene terephthalate fibers; and polyamide-based fibers such as nylon 6, nylon 66, and nylon 12 fibers are suitable. Among these, polyethylene terephthalate is preferred from the viewpoint that the fibers themselves do not yellow even when exposed to direct sunlight for long periods of time, and the dyeing fastness thereof is excellent, and in consideration of applications requiring durability, such as in the application of automobile seats. Further, from the viewpoint of reducing the environmental impact, polyethylene terephthalate which has been chemically recycled or material recycled, or polyethylene terephthalate using plant-derived raw materials is further preferred.

In at least the fiber layer (A), it is preferable that the fibers be dispersed substantially in a single fiber form. For example, fibers obtained by using filaments capable of ultrafine fiber generating such as sea-island type composite fibers (e.g., a copolymerized polyester is used as the sea component and a conventional polyester is used as the island component), subjecting the fibers to a three-dimensional entanglement with a scrim, and subsequently subjecting the fibers to fine processing (removing the sea component of the sea-island type composite fiber by dissolution or decomposition) are present as a fiber bundle in the fiber layer (A), and dispersed not substantially in a single fiber form. As an example, ultrafine fibers having a single fiber fineness of 0.2 dtex are obtained by producing sea-island type composite cut fibers in which an island component is 24 islands/1f corresponding to a single fiber fineness of 0.2 dtex, thereafter forming a fiber layer (A) with the sea-island type composite cut fibers, forming a three dimensional entangled body with a scrim by needle-punch processing, filling the three dimensional entangled body with polyurethane resin, and then dissolving or decomposing the sea component. In this case, the single fibers are present in the fiber layer (A) in a state of 24 convergent fibers (corresponding to 4.8 dtex in a convergent state)

In the present disclosure, the phrase "dispersed substantially in a single fiber form" means that the fibers do not form a fiber bundle, such as the island component in the sea-island composite fibers described above. When the fiber layer (A) is composed of fibers dispersed substantially in a single fiber form, it is excellent in surface smoothness, and, for example, uniform brushing can be easily obtained when the outer surface of the fiber layer (A) is raised by buffing, and even when the adhesion ratio of the polyurethane resin is relatively small, a lint-like appearance called pilling is not readily generated by abrasion, whereby an artificial leather having superior surface quality and abrasion resistance is obtained. Furthermore, when the fibers are dispersed in a single fiber form, since the fiber interval tends to be narrow and uniform, suitable abrasion resistance can be obtained even if the polyurethane resin is adhered in a fine state. Examples of the method for dispersing fibers substantially in a single fiber form include a method of converting fibers produced by a direct spinning method into a fiber sheet by a papermaking method, and a method of promoting a single-fiber conversion of an ultrafine fiber bundle by dissolving or decomposing the sea component of a fiber sheet composed of sea-island type composite fibers to generate an ultrafine fiber bundle, and thereafter subjecting the ultrafine fiber bundle surface to a high-speed water stream.

In fiber layers other than the fiber layer (A) among the fiber layers constituting the artificial leather, the fibers may or may not be dispersed in a single fiber form. However, in a preferred aspect, the layers other than the fiber layer (A) are also composed of fibers dispersed in a single fiber form. This is preferred from the viewpoint that the thickness of the artificial leather becomes homogeneous, whereby processing accuracy is improved, and quality is stabilized, since the fibers constituting the layers other than the fiber layer (A) are dispersed in a single fiber form.

The basis weight of the fiber layer (A) is preferably 10 g/m$^2$ to 200 g/m$^2$, more preferably 30 g/m$^2$ to 170 g/m$^2$, and further preferably 60 g/m$^2$ to 170 g/m$^2$, from the viewpoint of mechanical strength such as abrasion resistance. Further, when the artificial leather has three or more layers and includes a fiber layer (A), a scrim, and a fiber layer (B) stacked in this order, from the viewpoint of cost and ease of production, the basis weight of the fiber layer (B) is preferably 10 g/m$^2$ to 200 g/m$^2$, and more preferably 20 g/m$^2$ to 170 g/m$^2$. The basis weight of the scrim is preferably 20 g/m$^2$ to 150 g/m$^2$, more preferably 20 g/m$^2$ to 130 g/m$^2$, and further preferably 30 g/m$^2$ to 110 g/m$^2$, from the viewpoint of mechanical strength and entanglement between the fiber layer and the scrim.

The basis weight of the entire fiber sheet is preferably 50 g/m$^2$ to 550 g/m$^2$, more preferably 60 g/m$^2$ to 400 g/m$^2$, and further preferably 70 g/m$^2$ to 350 g/m$^2$.

In an aspect of the present invention, the flexibility value of the artificial leather is preferably 28 cm or less. "Flexibility value" is an indicator of the texture of the artificial leather. By setting the flexibility value to 28 cm or less, the formability as upholster or the interior material of a seat for interior, automobiles, aircraft, and railway vehicles is improved, and the usability is also suitable, whereby the needs required by the market in terms of flexibility can easily be satisfied. The flexibility value is preferably 6 cm to 26 cm, and more preferably 8 cm to 22 cm.

<Method for producing artificial leather>

Another aspect of the present invention provides a method for producing the artificial leather described above. In one aspect, the method comprises:

a fiber sheet production step in which the fiber sheet comprising the scrim and the fiber layer (A) is produced, and a resin filling step in which the fiber sheet is filled with a polyurethane resin. In one aspect, in the fiber sheet production step, at least the fiber layer (A) is produced by a papermaking method. The fiber sheet may comprise an additional layer, such as a fiber layer (B), in addition to the fiber layer (A) and the scrim, as described above.

Suitable examples of the method for producing an artificial leather include a production method in which the steps of (a), (b), and (c) shown below are carried out in the order of (a), (b), and (c), or in the order of (a), (c), and (b).

(a) A step of producing a fiber sheet having two or more layers comprising a scrim and a fiber layer (A),
(b) a step of performing a buffing process with sandpaper or the like on at least an outer surface of the fiber layer (A) to form a brushed surface, and
(c) a step of filling with a polyurethane resin by impregnating the fiber sheet with the polyurethane resin and then drying.

Step (a)

Examples of the method for producing each fiber layer (fiber layer (A) and optional fiber layer (B)) constituting a fiber sheet of the artificial leather include spinning direct coupling methods (e.g., the spunbond method and melt blowing method), and a method of forming a fiber sheet using cut fibers (e.g., dry methods such as carding or the airlaid method, and wet methods such as a papermaking method), and any of these can be suitably used. Sheets produced using cut fibers are suitable in terms of improvement of the surface quality of the artificial leather because they have little dyeing unevenness and are excellent in uniformity, whereby uniform naps can easily be obtained. Among them, a papermaking method is preferred in that the fibers can be easily dispersed in a single fiber form to form a fiber layer having high uniformity. In particular, it is preferable to produce at least the fiber layer (A) by a papermaking method. In the papermaking method, when a fiber layer composed of ultrafine fibers (e.g., ultrafine fibers having an average diameter of 8 $\mu$m or less) is produced, opening of the fibers and dispersion of fibers in a single fiber form tend to be easy, whereby uniformity of the obtained fiber layer tends to be high, which is particularly preferable.
The cut fiber length, in the case in which a method using cut fibers is selected, is preferably 13 mm to 102 mm, more preferably 25 mm to 76 mm, and further preferably 38 mm to 76 mm in dry methods (carding, airlaid method, etc.), and is preferably 1 mm to 30 mm, more preferably 2 mm to 25 mm, and further preferably 3 mm to 20 mm in wet methods (papermaking method, etc.). For example, the aspect ratio (L/D), which is a ratio of the length (L) and the diameter (D), of the cut fibers used in wet methods (such as a papermaking method) is preferably 500 to 2000, and more preferably 700 to 1500. Such an aspect ratio is preferable since when the cut fibers are dispersed in water to prepare a slurry, the dispersibility and fiber opening property of the cut fibers in the slurry are favorable, the strength of the fiber layer is suitable, and since the fiber length is short and dispersion in a single fiber form is easy as compared with dry methods, a link-like phenomenon known as pilling is unlikely to be brought about by friction. For example, the fiber length of cut fibers having a diameter of 4 $\mu$m is preferably 2 mm to 8mm, and more preferably 3 mm to 6 mm.
Examples of the entanglement method used in the production of a fiber sheet comprising a scrim and a fiber layer (A) include a needle-punch method and a hydroentanglement method, and any of these can be suitably used. A hydroentanglement method is preferred since it is highly suitable for the entanglement of extremely fine fibers (e.g., ultrafine fibers having an average diameter of 8 $\mu$m or less) and it is unlikely to cause destruction or deformation of the scrim organization.
The pore diameters of the high-pressure water injection nozzle holes in the hydroentanglement method, are preferably 0.05 mm to 0.40 mm, and more preferably 0.08 mm to 0.30 mm from the viewpoint of obtaining a high entanglement effect and excellent surface smoothness. In hydroentanglement, water is conventionally injected at a water pressure of 1 to 10 MPa. Furthermore, the distance from the high-pressure water injection surface to the object to be treated is preferably 5 mm to 100 mm, and more preferably 10 mm to 70 mm from the viewpoint of a high entanglement effect, fabric guidance prior to the entanglement treatment, and the process passability during the entanglement treatment. It is also preferable to reciprocate the high-pressure water injection nozzles or to move the nozzles in a circular motion at right angles to the treatment progression direction in order to increase the entanglement effect and surface smoothness. The hydroentanglement conditions such as the pore diameter and the hydraulic pressure of the nozzle may be appropriately selected in accordance with the structure, basis weight, and treatment speed of the fiber sheet to be treated.
In the needle punching method, the number of barbs of a needle used is preferably one to nine. By setting the number of barbs of a needle to one or more, the entangling effect can be obtained and damage to fibers can be suppressed. By setting the number of barbs of a needle to nine or fewer, damage to the fibers can be reduced, and additionally, needle marks remaining in the artificial leather can be reduced, whereby the appearance of the product can be improved.

In consideration of the fiber entangling property and the influence on the appearance of the product, it is preferable that the total depth of the barb (length from the tip to the bottom of the barb) be 0.05 mm to 0.10 mm. If the total depth of the barb is 0.05 mm or more, efficient fiber entanglement is facilitated because good hooking of the fibers is obtained. Furthermore, when the total depth of the barb is 0.10 mm or less, needle marks remaining in the artificial leather are reduced and the quality is improved. In consideration of the balance between the strength of the barb portion and fiber entanglement, the total depth of the barb is more preferably 0.06 mm to 0.08 mm.

When the fibers are entangled by needle punching, the range of the punch density is preferably 300 punches/cm$^2$ to 6000 punches/cm$^2$, and more preferably 1000 punches/cm$^2$ to 6000 punches/cm$^2$.

Step (b)

In step (b), a buffing process is performed on at least an outer surface of the fiber layer (A) of the fiber sheet with sandpaper or the like to form a brushed surface.

Step (c)

In the step (c), a polyurethane resin is filled by impregnating the fiber sheet with the polyurethane resin and then drying. In a typical embodiment, the polyurethane resin is impregnated in the form of an impregnating liquid such as a solution (e.g., in the case of a solvent dissolution) or a dispersion (e.g., in the case of an aqueous dispersion). The concentration of the polyurethane resin in the impregnating solution may be, for example, 2 to 30% by mass, 3 to 25% by mass, or 4 to 20% by mass. In an aspect, the impregnation liquid is prepared and impregnated into the fiber sheet so that the ratio of the polyurethane resin to 100% by mass of the fiber sheet is 5 to 20% by mass.

In a preferred aspect, the method for producing the artificial leather includes a step (d) of coating a fiber layer (A) (specifically, the surface of the fiber layer (A) which becomes the first outer surface of the artificial leather) with a hot-water-soluble resin aqueous solution prior to step (c) described above, and then drying. Note that, in the present disclosure, the "hot-water-soluble resin" is a resin which is slightly soluble in room temperature water, and specifically has a dropout rate of 25% or less in room temperature water at a temperature of 20 $\pm$ 2 °C. Note that the dropout rate is a value obtained by the following formula,

$$\text{Dropout Rate} = (W2 - W3) / (W2 - W1) \times 100(\%)$$

where W1 (g) is the weight of the fiber sheet, W2 (g) is the weight of the fiber sheet coated with the resin on the brushed surface of the fiber layer (A) of the fiber sheet, and W3 (g) is the weight of the fiber sheet obtained by immersing the fiber sheet in room temperature water at a temperature of 20 $\pm$ 2 °C for 10 seconds, subsequently removing the water and drying the fiber sheet.

By performing coating with the hot-water-soluble resin and then drying before filling of the polyurethane resin, it is possible to protect the brushed surface formed at least on the outer surface of the fiber layer (A) by buffing with the hot-water-soluble resin (i.e., to protect the blushed portion from the excessive adhesion of the polyurethane resin filled in the fiber sheet in the subsequent step). Subsequently, the polyurethane resin is filled and the hot-water-soluble resin is then removed in hot water (e.g., in a jet dyeing machine), whereby the brushing can be exposed again. Thus, the step order of (a), (b), (d), and (c) is preferable from the viewpoint of obtaining an excellent surface quality and a "smooth" texture by making the area ratio of the polyurethane resin on the outer surface of the artificial leather relatively low.

Examples of the method for protecting the brushing on an outer surface of a fiber layer (A) using a hot-water-soluble resin include a method in which brushing is formed on the fiber sheet, and the fiber sheet is then immersed in a hot-water-soluble resin aqueous solution and dried, whereby the hot-water-soluble resin actively migrates into the brushed surface during drying (according to this method, the hot-water-soluble resin moves from the inside of the fiber sheet to the vicinity of the brushed surface with the evaporation of moisture, whereby the hot-water-soluble resin is unevenly distributed in the vicinity of the brushed surface in the cross-sectional direction of the fiber sheet), and a method in which the hot-water-soluble resin is applied onto the fiber layer (A) and then dried in the step (d). Though any of the above methods can be employed as the means for protecting the brushed surface, a coating method is preferable from the viewpoint that an excellent surface quality and a high abrasion resistance can be easily obtained because only the brushed surface of the fiber layer (A) is protected.

Examples of the hot-water-soluble resin include partially saponified polyvinyl alcohol and fully saponified polyvinyl alcohol. In addition, when a partially saponified polyvinyl alcohol is used as the hot-water-soluble resin, since the partially saponified polyvinyl alcohol tends to be more easily eluted into water at room temperature (20 °C) as compared with a fully saponified polyvinyl alcohol, it is preferable to prevent the polyvinyl alcohol from excessively dropping out in the step of impregnating the fiber sheet with the water-dispersed polyurethane resin. As a means for preventing excessive dropping out of the partially saponified polyvinyl alcohol, it is preferable to appropriately select the degree of polymerization of the partially saponified polyvinyl alcohol or to add a crosslinking agent to the partially saponified polyvinyl alcohol aqueous solution. Among these, the degree of saponification is preferably 70 mol% or more, and more preferably 78 mol% or more from the viewpoint of preventing excessive dropout of the polyvinyl alcohol in the step of impregnating the fiber sheet with the water-dispersed polyurethane resin. Further, the degree of polymerization is preferably 1000 or more, and more preferably 1200 or more.

It is preferable that the hot-water-soluble resin have high affinity for the outer surface of the fiber layer to be coated in addition to not excessively dropping out in the step of impregnating the fiber sheet with the water-dispersed polyurethane resin. Among these, when polyvinyl alcohol is used as the hot-water-soluble resin, a partially saponified polyvinyl alcohol having a degree of saponification of less than 90 mol% is preferable from the viewpoint of affinity with the hydrophobic synthetic fiber and moderate penetration in the thickness direction. When the degree of saponification of the polyvinyl alcohol resin is low and the fibers constituting the fiber layer (A) are hydrophobic synthetic fibers such as polyester-based fibers, the affinity between the polyvinyl alcohol resin and the hydrophobic synthetic fibers is high and the uniformity of the coating is suitable, whereby the surface quality becomes suitable. The degree of saponification of the partially saponified polyvinyl alcohol is preferably 90 mol% or less, and more preferably 89 mol% or less.

The viscosity of the hot-water-soluble resin (preferably the partially saponified polyvinyl alcohol) aqueous solution at the time of coating on the brushed surface of the fiber layer (A) is preferably in the range of 0.5 to 7.0 Pa·s when measured with a B-type viscometer ("B8L" manufactured by Tokyo Meter) at $25 \pm 5$ °C. When the viscosity of the hot-water-soluble resin aqueous solution is 0.5 Pa·s or more, the hot-water-soluble resin aqueous solution does not excessively permeate in the thickness direction of the fiber sheet, and the hot-water-soluble resin can be adhered unevenly to the vicinity of the outer surface of the fiber layer (A). As a result, there is little risk of inhibition of the binder effect of the water-dispersed polyurethane resin inside the fiber sheet, and it is easy to achieve both excellent surface quality and good mechanical strength. When the viscosity of the hot-water-soluble resin aqueous solution is 7.0 Pa·s or less, coating workability is good (the coating adheres well on the outer surface of the fiber layer (A)), and a uniform coating layer is obtained, whereby the brushed surface of the fiber layer (A) is well protected, and as a result, the surface quality is further improved. The viscosity of the hot-water-soluble resin aqueous solution is more preferably 1.0 to 5.0 Pa·s.

Note that, examples of the method for adjusting the viscosity of the hot-water-soluble resin aqueous solution within the above range include a method of adjusting the degree of polymerization of the hot-water-soluble resin and the concentration of the hot-water-soluble resin aqueous solution as factors. The degree of polymerization of the hot-water-soluble resin is preferably 1000 to 4000, and more preferably 1200 to 1700. Furthermore, the concentration of the hot-water-soluble resin in the hot-water-soluble resin aqueous solution is preferably, for example, 10 to 13% by mass, and more preferably 11 to 12% by mass.

Since there is little risk of inhibition of the binder effect of the polyurethane resin inside the fiber sheet and it is easy to achieve both mechanical strength such as abrasion resistance and excellent surface quality, the coating amount of the polyvinyl alcohol solid content per unit area of the fiber sheet is preferably 5 $g/m^2$ to 20 $g/m^2$, more preferably 7 $g/m^2$ to 18 $g/m^2$, and further preferably 9 $g/m^2$ to 15 $g/m^2$.

Examples of the means for removing the hot-water-soluble resin from the fiber sheet include a method of immersion in hot water at 60 °C or higher, preferably 80 °C or higher, and a method of removing the hot-water-soluble resin while circulating hot water at 80 °C or higher prior to performing dyeing processing in a jet dyeing machine. In particular, a method of removing the hot-water-soluble resin in a jet dyeing machine is preferred since a step of drying and winding of the fiber sheet after removing the hot-water-soluble resin can be omitted, whereby production efficiency can be increased.

It is preferable that the artificial leather be subjected to a dyeing treatment for the purpose of enhancing the surface appearance value (i.e., visual effect). As the dye stuff used in the dyeing treatment, when the fibers constituting the fiber layer (A) are polyester fibers, a disperse dye stuff is generally used, and when the fibers are polyamide fibers, an acid dye stuff is generally used. As the dyeing method, a conventional method well known to dyeing processors can be used. In the artificial leather, a jet dyeing machine is preferably used from the viewpoint of leveling properties. The artificial leather dyed in this manner is preferably subjected to soaping and, if necessary, reduction cleaning (i.e., washing in the presence of a chemical reducing agent) to remove excess dye stuff.

EXAMPLES

The present invention will be further specifically described below based on the Examples, though the scope of the present invention is not limited thereto. Regarding the artificial leather samples of the Examples and the Comparative Examples, surface quality and physical properties were evaluated by the following methods.

(1) Average Sizes of Polyurethane Resin

▪ Pretreatment

Samples were cut into 1 cm × 0.5 cm. Thereafter, an epoxy resin (primary agent: "Quetol 812" manufactured by Nissin EM Co., Ltd., curing agent: "MNA" manufactured by Nissin EM Co., Ltd., Accelerator: "DMP-30" manufactured by Nissin EM Co., Ltd.) was embedded in the internal space of each sample. The obtained resin-embedded samples were cut parallel to the thickness direction with a microtome to obtain a smooth cut surface. The samples were then allowed to stand in a saturated vapor of ruthenium tetraoxide for 2 hours to electro-stain the polyurethane resin adhering to the sample with ruthenium. The samples were then subjected to conductive processing by 1 nm coating processing with osmium atoms.

▪ Observation

When a scrim was contained in a sample, the deepest portion (i.e., the portion on the scrim side) of the fiber layer (A) on the cut surface of the conductively treated sample was set as the observation region, the fibers constituting the scrim were excluded from the observation target, and observation was carried out with a scanning electron microscopy (SEM, "SU8220" manufactured by Hitachi, Ltd.) at a magnification of 500x. Note that when no scrim was contained in a sample, the central portion on the cut surface of the conductively treated sample was set as the center point of the observation region in the thickness direction of the artificial leather, and the sample was observed with the SEM at a magnification of 500x. The observation conditions are as follows.
Acceleration voltage: 5 kV
Detector: YAG-BSE (Reflective Electrons)
Imaging magnification: 500x

▪ Image Analysis

The obtained SEM-reflected electron images were binarized by the following method using image analysis software "ImageJ (version: 1.51j8), National Institutes of Health", and the average sizes of the polyurethane resin was determined.

(1) The SEM images were hand-path-filtered. The processing conditions are as follows:
(2) Median filtering (radius: 4.0, one filtering repetition).
(3) Binarization was performed by the MaxEntropy method, and the black portions in the SEM images after binarization were defined as the polyurethane resin.
(4) The average sizes of the polyurethane resin were determined from the obtained binarized images. In other words, using the Analyze Particle function of ImageJ (conditions: Size = 0 to infinity, Circularity = 0.00 to 1.00), the value obtained by dividing the sum of the areas of the respective polyurethane resins distributed within each SEM image by the number of distributions of the polyurethane resin was defined as the average size of the polyurethane resin. The arithmetic mean value of five randomly measured points of the same measurement sample is used as the average size of the sample.

(2) Ratio (d/D) of Total Area (d) of Polyurethane Resin having Area of 100 $\mu m^2$ or more to Total Area (D) of Polyurethane Resin at Cut Surface

From a binarized image obtained by the same operation as in (1) above, the total area (D) of the polyurethane resin in the SEM image and the total area (d) of the polyurethane resin forming a closed shape having an area of 100 $\mu m^2$ or more were determined, and the value of ((d/D) × 100%) was calculated.

(3) Calculation of Average Diameter of Fibers

The average diameter of the fibers constituting the fiber layer (A) was obtained by imaging the above cut surface of the artificial leather using a scanning electron microscope (SEM, "JSM-5610" manufactured by JEOL) at a magnification of 1500x, randomly selecting 100 fibers forming the first outer surface of the artificial leather among the fiber layers (A), measuring the diameters of the cross-sections of the monofilaments, and determining the arithmetic average value of the 100 measured values.

When the observed shape of the cross-section of a monofilament was not circular, the distance between the outer circumferences on a straight line perpendicular to the middle point of the longest diameter of the monofilament cross-section was taken as the fiber diameter. FIG. 2 is a conceptual diagram illustrating the method for determining fiber diameter. When, for example, a cross-section A of the fibers is oval as in FIG. 2, the outer circumferential distance c on the straight-line b orthogonal to the midpoint p of the longest diameter a of the cross-section A in the observation image was defined as the fiber diameter.

(4) Calculation of Flexibility Value

Samples were cut into 20 cm × 20 cm squares to serve as measurement samples. The measurement samples were placed on a horizontal plane, the vertexes of the square were designated as A, B, C, and D, and the vertices A and C facing each other on the diagonal line were overlapped. Vertex A was placed on a horizontal plane, and vertex C is superimposed onto vertex A. Vertex C was then gradually moved away from the vertex A along the diagonal AC in a state in which it was brought into contact with the measurement sample, the point at which vertex C separated from the measurement sample plane was defined as point E, and the distance between point E and vertex C was defined as a flexibility value 1. A flexibility value 2 was measured by the same procedure as described above replacing vertex A with vertex B and vertex C with vertex D. The arithmetic mean of the flexibility value 1 and the flexibility value 2 was taken as the flexibility value of the sample.

(5) Area Ratio of Polyurethane Resin in SEM Observation Area of First Outer Surface of Artificial Leather

- Pretreatment and Observation

Samples having a size of 0.5 cm × 0.5 cm were randomly cut from the same sample at three points, and these were used as measurement samples (n = 3). Next, the measurement samples were attached to a sample table for and air-blown for five seconds, and after undergoing a step of removing contaminants on the first outer surface of the measurement samples, the first outer surface of each of the three measurement samples was observed with a scanning electron microscope (SEM, "JSM-5610" manufactured by JEOL) at a magnification of 500x. FIG. 3A is an example of an SEM image of the first outer surface of the measurement sample of Example 1.

- Polyurethane Resin Marking

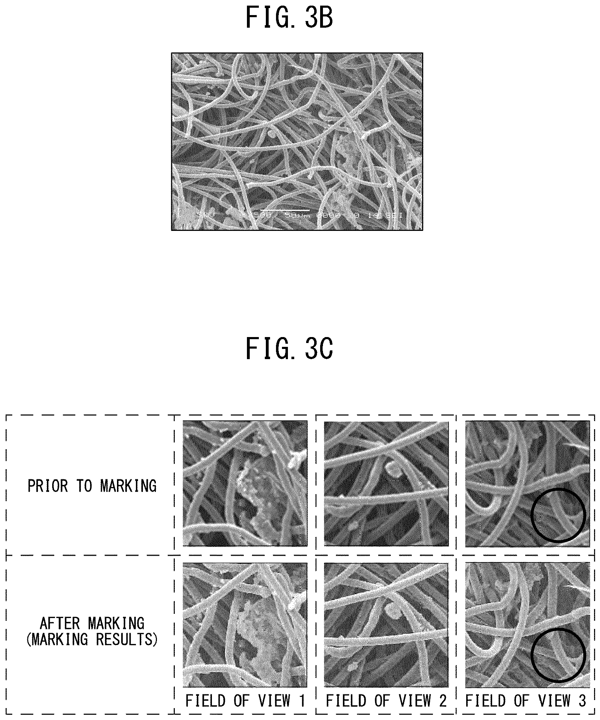

Ten randomly selected subjects were asked to identify adherents as polyurethane resin other than fiber morphology in the SEM images, and the distributions thereof were marked. For marking, an orange fluorescent pen ("C-bi PB-K2-OR" manufactured by Office) was used. Note that the marking portions are in the range of hue: 22 to 43 degrees, brightness: 40 to 100%, and saturation: 40 to 85% in the HSV color space. Since the operation was performed on all three of the SEM images captured by each of the 10 subjects, 30 marked SEM images were obtained. FIG. 3B is an example of the marking result of FIG. 3A by a subject, and FIG. 3C is an example of marking determination. Regarding the adherents, all adherents other than fiber morphology were marked, including the adherents other than fiber morphology, as are clear from "field of view 1" of FIG. 3C, the small grain-shaped adherents as in "field of view 2" of FIG. 3C, and the adherents appearing at the back as in "field of view 3" of FIG. 3C. Note that positions at which it was difficult to distinguish whether or not they were fiber morphology, such as shown by the round outline of "field of view 3" of FIG. 3C, were not marked.

- Image analysis

The obtained marked SEM image (FIG. 3B) was binarized by the following method using image analysis software "ImageJ (version: 1.51j8), National Institutes of Health", and the area ratios of polyurethane resin in the SEM observation area of the first outer surface of the samples were calculated.

1) The marked SEM image (FIG. 3B) was color-threshold processed. Processing conditions are as follows.

[Table 1]

| Setting Contents | Setting Item in imageJ | Conditions, Setting Values |
|---|---|---|
| Color Space | Color Space | HSB |

(continued)

| Setting Contents | Setting Item in imageJ | Conditions, Setting Values |
|---|---|---|
| Target Hue Range (Hue) | Pass | Checked[*] |
| | Set Value | 0 to 255 (0 to 255 corresponds to targeting all colors) |
| Target Color Saturation (Saturation) | Pass | Checked[*] |
| | Set Value | 50 to 255 (corresponds to targeting saturations of 50 to 255) |
| Threshold (Brightness) | Pass | Checked[*] |
| | Set Value | 100 to 255 (corresponds to a target brightness of 100 to 255) |
| Thresholding Method | Thresholding method | Default |
| Fill Color | Threshold color | Red (corresponds to how many colors should be within the threshold range within the above three conditions) |
| Filling Method | Dark background | Checked |
| [*] "Checked" means that the parameter condition was employed. | | |

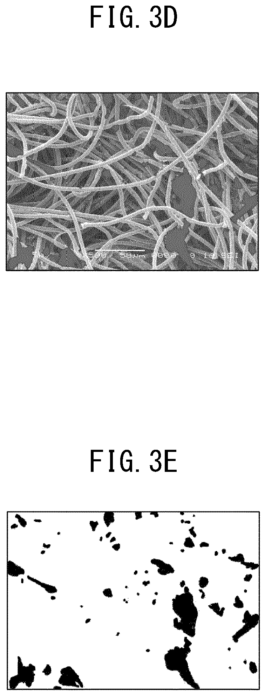

The red filled areas in the resulting post-processed SEM images (FIG. 3D) correspond to the polyurethane resin.

2) Each color-threshold-processed SEM image was binarized by the MaxEntropy method. The black areas in the SEM image (FIG. 3E) after binarization represented the polyurethane resin.
3) The total area of the black portions in the SEM image after binarization (FIG. 3E) divided by the area of the SEM image was taken as the above area ratio.
4) The above procedure was applied to all 30 marked SEM images, and the area ratios of n = 30 were measured. They were averaged and taken as the area ratio of the polyurethane resin in the SEM observation regions of the first outer surface.

(6) Surface Quality

The surface quality of the artificial leather was evaluated across seven grades by visual and sensory evaluation using a total of 20 evaluators including 10 adult males and 10 adult females each in good health, and the most common evaluation was defined as the surface quality. Surface quality grades 3 to 7 were considered suitable (pass).

Grade 7: Brushing is very dense, texture is very smooth, and appearance is very good.
Grade 6: Evaluation between Grade 7 and Grade 5.
Grade 5: Brushing is dense, texture is smooth, and appearance is good.
Grade 4: Evaluation between the Grade 5 and Grade 3.
Grade 3: There is overall uniform brushing, no rough texture, and a leather-like appearance.
Grade 2: Evaluation between Grade 3 and Grade 1.
Grade 1: Brushing was mottled, texture was rough, and the appearance is poor.

(7) Abrasion Resistance

Evaluation was performed in accordance with the evaluation results of JIS-L-1096 (E method: Martindale method, 12 kPa pressure load). The evaluation criteria are shown below. The case in which the scrim was not exposed after 30000 abrasion repetitions was considered a pass (A, B or C), and the result of measurement was evaluated based on the number of abrasion repetitions at which the scrim was exposed or the state of the occurrence of pilling on the abraded surface.

A: After 40000 repetitions, no scrim was exposed and no pilling of the abraded surface occurred.
B: No scrim was exposed after 30000 repetitions, but after 40000 repetitions, scrim was exposed or pilling occurred on the abraded surface.
C: No scrim exposure after 20000 repetitions, but after 30000 repetitions, scrim was exposed or pilling occurred on the abraded surface.
D: After 20000 repetitions, scrim was exposed or pilling occurred on the abraded surface.

(8) Ratio of Polyurethane Resin to Fiber Sheet

The ratio of polyurethane resin to fiber sheet was measured by the following method.
The mass of the fiber sheet before impregnation with the polyurethane resin was defined as A (g). The fiber sheet was impregnated with a polyurethane resin dispersion, then heated and dried using a pin tenter dryer at 130 °C, softened while being immersed in hot water heated to 90 °C, and then dried to obtain a fiber sheet filled with the polyurethane resin (hereinafter, also referred to as a "resin filled fiber sheet"). The mass of the resin filled fiber sheet is defined as B1 (g). The ratio (C1) of the polyurethane resin is calculated by the following formula.

$$C1 = (B1 - A) / A \times 100 \ (\mathrm{wt\%})$$

(9) Average primary particle size of the polyurethane resin dispersion

Average primary particle size was measured with a laser diffraction particle size distribution measuring device ("LA-920", manufactured by HORIBA, Ltd.) according to the measuring manual of the device, and the average diameter was taken as the average primary particle diameter.

(10) Degree of Saponification of Polyvinyl Alcohol

The degree of saponification was measured in accordance with the JIS K6726 (1994) 3.5 standard.

(11) Degree of Polymerization

The degree of polymerization was measured in accordance with the JIS K6726 (1994) 3.7 standard.

[Example 1]

(Production of Fiber Sheets)

Polyethylene terephthalate fibers having an average single fiber diameter of 4 $\mu$m were produced by a melt spinning method and cut to a fiber length of 5 mm (hereinafter, polyethylene terephthalate fibers having an average single fiber diameter of 4 $\mu$m and which were cut to a fiber length of 5 mm are also referred to as "PET ultrafine cut fibers"). The PET ultrafine cut fibers were dispersed in water to produce a papermaking sheet having a basis weight of 100 g/m$^2$ by a papermaking method, and used as a fiber layer (A) serving as a surface layer.
In a similar manner, PET ultrafine cut fibers were dispersed in water to produce a papermaking sheet having a basis weight of 50 g/m$^2$ by a papermaking method, and used as a fiber layer (B).
A scrim (plain weave fabric) having a basis weight of 95 g/m$^2$ of 166 dtex/48 f polyethylene terephthalate fibers was inserted between the fiber layer (A) and the fiber layer (B) to form a three-layer laminate.
Next, a high-speed water stream using a straight flow injection nozzle having a pore diameter of 0.15 mm was jetted onto the three-layer laminate at a pressure of 4 MPa from the fiber layer (A) side and 3 MPa from the fiber layer (B) side, the fiber layer (A) and the fiber layer (B) were entangled and integrated with the scrim and then dried at 100 °C using an air-through type pin tenter dryer to obtain a fiber sheet having a three-layer structure.

(Production of Artificial Leather)

The outer surface of the fiber layer (A) of the fiber sheet was brushed using #400 emery paper.
Thereafter, the above fiber sheet was impregnated with an impregnation liquid containing the components shown in Table 2 and then heated and dried using a pin tenter dryer at 130 °C, and then softened while being immersed in hot water heated to 90 °C, and then dried, whereby the anhydrous sodium sulfate and the polyvinyl alcohol resin were extracted and removed to obtain a fiber sheet filled with a water-dispersed polyurethane resin (resin filled fiber sheet). In the resin-filled fiber sheet, the ratio of the water-dispersed polyurethane resin to the total mass of fibers of the fiber sheet was 10% by mass.

[Table 2]

| Components of Impregnation Liquid | Amount in Impregnation Liquid (as solid content mass%) | Remarks |
|---|---|---|
| Polyether-based Water-dispersed Polyurethane Dispersion "AP-12" (NICCA Chemical) (Solid Content Concentration: 35 mass%) | 9.0 | Average primary particle diameter : 0.3 $\mu$m |
| Anhydrous sodium sulfate | 3.0 | Impregnation Agent |
| Polyvinyl Alcohol "N-300" (Nippon Synthetic Chemical Industries) | 1.0 | Degree of Saponification: 98 to 99 mol% Degree of Polymerization: 1200 |

Lastly, the resin filled fiber sheet was dyed with 5.0%owf of a blue disperse dye stuff ("BlueFBL" manufactured by Sumitomo Chemical Co., Ltd.) using a jet dyeing machine for 15 minutes at 130 °C, followed by reduction cleaning. Thereafter, it was dried using a pin tenter dryer at 100 °C for 5 minutes to obtain an artificial leather.

[Examples 2 and 3]

An artificial leather was obtained by the same procedure as in Example 1, except that the mass% of the polyether-based water-dispersed polyurethane of Example 1 (i.e., the solid content in the polyether-based water-dispersed polyurethane dispersion) in the impregnation liquid was changed to 4.5% by mass (Example 2) and 13.5% by mass (Example 3), respectively, and the ratio of the water-dispersed polyurethane resin to the total weight of the fibers of the fiber sheet was changed to 5% by mass (Example 2) and 15% by mass (Example 3), respectively.

[Example 4]

An artificial leather was obtained by the same procedure as in Example 2, except that the average primary particle diameter of the polyether-based water-dispersed polyurethane dispersion of Example 2 was changed to 0.2 $\mu$m.

[Example 5]

An artificial leather was obtained by the same procedure as in Example 1, except that the average diameter of the PET ultrafine cut fibers of Example 1 was changed to 7 $\mu$m.

[Example 6]

An artificial leather was obtained by the same procedure as in Example 1, except that the mass% of polyvinyl alcohol "N-300" in the impregnation liquid of Example 1 was changed to 3.0% by mass.

[Example 7]

Polyethylene terephthalate copolymerized with 8 mol% of sodium 5-sulfoisophthalate was used as the sea component, and polyethylene terephthalate was used as the island component, and sea-island type conjugate fibers having an island number of 16 islands/1f and an average fiber diameter of 18 $\mu$m were obtained at a composite ratio of 20% by mass of sea component and 80% by mass of island component. The obtained sea-island composite fibers were cut to a fiber length of 51 mm to form a staple, and a sheet having a basis weight of 125 g/m$^2$ was formed through a card and cross-lapper, and used as the fiber layer (A). Further, a sheet having a basis weight of 63 g/m$^2$ was produced in the same manner and used as the fiber layer (B).

A scrim (plain weave fabric) having a basis weight of 95 g/m$^2$ composed of 166 dtex/48 f polyethylene terephthalate fibers was inserted between the fiber layer (A) and the fiber layer (B) to form a three-layer laminate, and a fiber sheet having a three-layer structure was obtained by needle-punching.

The fiber sheet was subjected to treatment for 25 minutes by immersion in an aqueous sodium hydroxide solution having a concentration of 10 g/L heated to a temperature of 95 °C, and a sea-component dissolution to remove the sea components of the sea-island composite fibers while shrinking the fiber sheet. The average diameter of the monofilaments of the fibers constituting the fiber layer (A) after the sea-component dissolution was 4 μm.

Next, a high-speed water stream using a straight flow injection nozzle having a pore diameter of 0.15 mm was jetted at a pressure of 4 MPa from the fiber layer (A) side and 3 MPa from the fiber layer (B) side, a densification treatment was performed so as to fill the voids generated by the dropout of the sea components, and simultaneously, promote dispersing of the monofilaments of the fibers constituting the fiber bundle. Thereafter, a fiber sheet having a three-layer structure was obtained by drying at 100 °C using an air-through type pin tenter dryer.

Using the obtained fiber sheet, an artificial leather was produced by the same procedure as in (Preparation of Artificial Leather) of Example 1.

[Example 8]

An artificial leather was obtained by the same procedure as in Example 7, except that both of the fiber layer (A) and the fiber layer (B) of Example 7 were not subjected to a water jet treatment after sea-component dissolution.

[Example 9]

An artificial leather was obtained by the same procedure as Example 1 except that prior to the step of impregnating the fiber sheet of Example 1 with the impregnating liquid, the outer surface of the fiber layer (A) was coated (solid content coating amount: 11 g/m$^2$) with polyvinyl alcohol (aqueous solution of "N-300", manufactured by Nippon Synthetic Chemical Industries (degree of saponification: 98 to 99 mol% or less, degree of polymerization: 1200) diluted to 11% by mass, aqueous solution viscosity: 1.5 Pa·s) was coated by a doctor knife method and then dried at 100 °C using an f type pin tenter dryer, and the brushed surface was coated and processed with the polyvinyl alcohol.

[Example 10]

An artificial leather was obtained in the same procedure as in Example 9, except that the polyvinyl alcohol for coating processing of Example 9 was changed to an aqueous solution (aqueous viscosity: 1.5 Pa·s) prepared by diluting "GM-14R" (degree of saponification: 89 mol% or less, degree of polymerization 1700) to 11 mass%.

[Example 11]

An artificial leather was obtained by the same procedure as in Example 10, except that the average primary particle diameter of the polyether-based water-dispersed polyurethane dispersion of Example 10 was changed to 0.7 μm.

[Example 12]

An artificial leather was obtained by the same procedure as in Example 11, except that the mass% of the polyether-based water-dispersed polyurethane of Example 11 (i.e., the solid content in the polyether-based water-dispersed polyurethane dispersion) in the impregnation liquid was changed to 16% by mass, and the ratio of the water-dispersed polyurethane resin to the total mass of the fibers of the fiber sheet was changed to 18% by mass.

[Example 13] (PVA impregnation method)

An artificial leather was obtained by the same procedure as in Example 1, except that prior to the step of impregnating the fiber sheet with the impregnating liquid, the fiber sheet of Example 1 was impregnated with an aqueous solution prepared by diluting polyvinyl alcohol ("NL-05" manufactured by Nippon Synthetic Chemical Industries (degree of saponification: 98 mol% or more, degree of polymerization: 500) to 8% by mass, then nipped with a mangle-press (solid amount of polyvinyl alcohol to total mass of fibers of the fiber sheet: 15% by mass), and dried using an air-through type pin tenter dryer at 100 °C, whereby the polyvinyl alcohol migrated to the brushed surface to provide the same brushing protective effect as in the coating processing.

[Example 14]

An artificial leather was obtained by the same procedure as in Example 10, except that the mass% of polyvinyl alcohol "N-300" in the impregnation liquid of Example 10 was changed to 0% by mass.

[Comparative Example 1]

An artificial leather was obtained by the same procedure as in Example 12, except that the mass% of the polyether-based water-dispersed polyurethane of Example 12 (i.e., the solid content in the polyether-based water-dispersed polyurethane dispersion) in the impregnation liquid was changed to 22% by mass, and the ratio of the water-dispersed polyurethane resin to the total mass of the fibers of the fiber sheet was changed to 24% by mass.

[Comparative Example 2]

An artificial leather was obtained by the same procedure as in Example 4, except that the mass% of the polyether-based water-dispersed polyurethane of Example 4 (i.e., the solid content in the polyether-based water-dispersed polyurethane dispersion) in the impregnation liquid was changed to 2.7% by mass, and the ratio of the water-dispersed polyurethane resin to the total mass of the fibers of the fiber sheet was changed to 3% by mass.

[Comparative Example 3]

Polyethylene terephthalate copolymerized with 8 mol% of sodium 5-sulfoisophthalate was used as the sea component, and polyethylene terephthalate was used as the island component, and sea-island type conjugate fibers having an island number of 16 islands/1f and an average fiber diameter of 18 $\mu$m were obtained at a composite ratio of 20% by mass of sea component and 80% by mass of island component. The obtained sea-island composite fibers were cut to a fiber length of 51 mm to form a staple, a fiber web was formed through a card and a cross-lapper, and a fiber sheet was obtained by needle-punch processing. The obtained fiber sheet was immersed in hot water at 95 °C, shrunk, and then dried using a pin tenter dryer for 5 minutes at 100 °C, whereby a single layer sheet having a basis weight of 600 g/m$^2$ was obtained.

Next, the sheet was immersed in an aqueous sodium hydroxide solution having a concentration of 10 g/L heated to a temperature of 95 °C, subjected to treatment for 25 minutes to obtain a single-layer fiber sheet after sea-component dissolution in which the sea components of the sea-islands composite fibers were removed. The average single fiber diameter of the fibers constituting the obtained fiber sheet after sea-component dissolution was 4 $\mu$m.

Subsequently, the fiber sheet was impregnated with an aqueous solution in which polyvinyl alcohol (NL-05 (degree of saponification: 98 mol% or more, degree of polymerization: 500)) was diluted to 8 mass% and dried at 140 °C using a pin tenter dryer to obtain polyvinyl alcohol resin filled fiber sheet. The adhesion ratio of the polyvinyl alcohol resin to the total mass of fibers of this fiber sheet was 15% by mass.

Further, the fiber sheet was impregnated with the impregnating liquid shown in Table 3, then heated and dried using a pin tenter dryer at 130 °C, and then softened while being immersed in hot water heated to 90 °C, and then dried, whereby the anhydrous sodium sulfate and the polyvinyl alcohol resin were extracted and removed to obtain a fiber sheet filled with the water-dispersed polyurethane resin. The ratio of the water-dispersed polyurethane resin to the total mass of fibers of this fiber sheet was 35% by mass.

[Table 3]

| | Solid Content Amount in Impregnation Liquid (mass%) | Remarks |
|---|---|---|
| Polyether-based Water-dispersed Polyurethane Dispersion "AP-12" (NICCA Chemical) | 20 | Average primary particle diameter : 0.3 $\mu$m |
| Anhydrous sodium sulfate | 3.0 | Impregnation Agent |
| Polyvinyl Alcohol "N-300" (Nippon Synthetic Chemical Industries) | 1.0 | Degree of Saponification: 98 to 99 mol% Degree of Polymerization: 1200 |

Thereafter, using a half-slicing machine having an endless band knife, the fiber sheet filled with the water-dispersed polyurethane resin was sliced in half perpendicular to the thickness direction, and the surface of the half-sliced sheet on the non-half-sliced side was subjected to brushing using a #400 emery paper, and the half-sliced sheet was then dyed with 5.0%owf of a blue disperse dye stuff ("BlueFBL" manufactured by Sumitomo Chemical Co., Ltd.) for 15 minutes using a jet dyeing machine at 130 °C, and subjected to reduction washing. Thereafter, it was dried using a pin tenter dryer at 100 °C for 5 minutes to obtain a single-layer artificial leather.

[Comparative Example 4]

An artificial leather was obtained by the same procedure as in Comparative Example 3 except that the mass% of the polyether-based water-dispersed polyurethane of Comparative Example 3 (i.e., the solid content in the polyether-based water-dispersed polyurethane dispersion) in the impregnation liquid was changed to 9% by mass, and the ratio of the water-dispersed polyurethane resin to the total mass of the fibers of the fiber sheet was changed to 10% by mass.

The results of Examples 1 to 14 and Comparative Examples 1 to 4 above are shown in Table 4.

[Table 4-1]

| | P/A Of Scrim | P/A of Polyvinyl Alcohol Coating | Ratio of Polyurethane Resin to Fiber Sheet [mass%] | (d/D) [%] | Average Size of Polyurethane Resin [μm²] | Area Ratio of Polyurethane Resin on First Outer Surface [%] | Average Fiber Diameter of Fiber Layer (A) [μm] | Fiber Dispersion State of Fiber Layer (A) | Flexibility Value [cm] | Surface Quality [Grade] | Abrasion Resistance |
|---|---|---|---|---|---|---|---|---|---|---|---|
| Ex 1 | Present | Absent | 10 | 19 | 11 | 5.7 | 4 | Single Fiber Dispersed | 19 | 5 | A |
| Ex 2 | Present | Absent | 5 | 12 | 7.2 | 3.6 | 4 | Single Fiber Dispersed | 11 | 6 | C |
| Ex 3 | Present | Absent | 15 | 26 | 15 | 6.2 | 4 | Single Fiber Dispersed | 23 | 4 | A |
| Ex 4 | Present | Absent | 5 | 7.3 | 5.3 | 4.0 | 4 | Single Fiber Dispersed | 10 | 6 | C |
| Ex 5 | Present | Absent | 10 | 25 | 14 | 5.1 | 7 | Single Fiber Dispersed | 22 | 4 | A |
| Ex 6 | Present | Absent | 10 | 14 | 7 | 5.2 | 4 | Single Fiber Dispersed | 16 | 5 | B |
| Ex 7 | Present | Absent | 10 | 21 | 13 | 5.8 | 4 (composite fiber) | Single Fiber Treatment With Water Stream After sea-component dissolution | 21 | 4 | B |
| Ex 8 | Present | Absent | 10 | 22 | 14 | 6.5 | 4 (composite fiber) | Fiber Bundle | 22 | 3 | C |
| Ex 9 | Present | Present | 10 | 23 | 11 | 3.2 | 4 | Single Fiber Dispersed | 24 | 6 | A |
| Ex 10 | Present | Present | 10 | 24 | 12 | 1.7 | 4 | Single Fiber Dispersed | 24 | 7 | A |
| Ex 11 | Present | Present | 10 | 33 | 15 | 1.9 | 4 | Single Fiber Dispersed | 26 | 7 | A |

(continued)

| | P/A Of Scrim | P/A of Polyvinyl Alcohol Coating | Ratio of Polyurethane Resin to Fiber Sheet [mass%] | (d/D) [%] | Average Size of Polyurethane Resin [μm²] | Area Ratio of Polyurethane Resin on First Outer Surface [%] | Average Fiber Diameter of Fiber Layer (A) [μm] | Fiber Dispersion State of Fiber Layer (A) | Flexibility Value [cm] | Surface Quality [Grade] | Abrasion Resistance |
|---|---|---|---|---|---|---|---|---|---|---|---|
| Ex 12 | Present | Present | 18 | 40 | 18 | 2.1 | 4 | Single Fiber Dispersed | 28 | 7 | A |
| Ex 13 | Present | Impregnation | 10 | 16 | 8 | 2.4 | 4 | Single Fiber Dispersed | 17 | 6 | C |
| Ex 14 | Present | Present | 10 | 37 | 18 | 1.9 | 4 | Single Fiber Dispersed | 27 | 7 | A |

[Table 4-2]

| Comp Ex 1 | Present | Present | 24 | 54 | 22 | 2.2 | 4 | Single Fiber Dispersed | >28 | 7 | A |
|---|---|---|---|---|---|---|---|---|---|---|---|
| Comp Ex 2 | Present | Absent | 3 | 3.9 | 2.5 | 2.8 | 4 | Single Fiber Dispersed | (Note 1) | (Note 1) | (Note 1) |
| Comp Ex 3 | Absent | Impregnation | 35 | 63 | 23 | 7.1 | 4 (composite fiber) | Fiber Bundle | >28 | 2 | B |
| Comp Ex 4 | Absent | Impregnation | 10 | 18 | 10 | 6.0 | 4 (composite fiber) | Fiber Bundle | (Note 2) | (Note 2) | (Note 2) |

(Note 1) During the dyeing process using a jet dyeing machine, peeling occurred between the fiber layer and the scrim, whereby the fibers fell off, and a product worthy of physical property evaluation could not be obtained.
(Note 2) Due to insufficient strength of the fiber sheet which was filled with polyurethane resin (poor dyeing resistance), the sheet was broken during the dyeing process using a jet dyeing machine, whereby a product worthy of physical property evaluation could not be obtained.

From these results, it can be understood that, in each of the Examples, an artificial leather had a scrim and a fiber layer (A) and a polyurethane resin was distributed in a specific structure, whereby the obtained artificial leather was excellent in surface quality, texture, and mechanical strength (particularly, abrasion resistance). Furthermore, the artificial leather according to each of the Examples has an advantage in that an organic solvent is not used in the production process, whereby the environmental impact is small.

INDUSTRIAL APPLICABILITY

Since the artificial leather according to an aspect of the present invention is excellent in surface quality, texture, and mechanical strength (abrasion resistance, etc.), it can be suitably used as, for example, a clothing product as well upholstery and interior materials for seats for interior, automobiles, aircraft, and trains.

REFERENCE SIGNS LIST

1       fiber sheet

11      scrim

12      fiber layer (A)

13      fiber layer (B)

**Claims**

1.  An artificial leather comprising a fiber sheet and a polyurethane resin, wherein the fiber sheet includes a scrim, which is a woven or knitted fabric, and a fiber layer (A) constituting a first outer surface of the artificial leather, and in a thickness direction cross-section of the fiber layer (A), the ratio (d/D) of the total area (d) of a polyurethane resin forming a closed shape having an area of 100 $\mu m^2$ or more to the total area (D) of the polyurethane resin satisfies the following formula (1):

$$5 \le (d/D) \times 100 \le 50 \ (\%) \ (1).$$

2.  The artificial leather according to claim 1, wherein in a thickness direction cross-section of the fiber layer (A), the average area of the closed shape formed by the polyurethane resin is 3 $\mu m^2$ to 18 $\mu m^2$.

3.  The artificial leather according to claim 1 or 2, wherein an area ratio of the polyurethane resin in the first outer surface is 6.5% or less.

4.  The artificial leather according to any one of claims 1 to 3, wherein the fiber sheet has a three-layer structure composed of:

    a fiber layer (A) constituting a first outer surface of the artificial leather,
    a fiber layer (B) constituting a second outer surface of the artificial leather, and
    a scrim arranged between the fiber layer (A) and the fiber layer (B).

5.  The artificial leather according to any one of claims 1 to 4, wherein at least the fiber layer (A) is composed of fibers having an average diameter of 1 $\mu m$ to 8 $\mu m$.

6.  The artificial leather according to any one of claims 1 to 5, wherein at least the fiber layer (A) is composed of fibers dispersed substantially in a single fiber form.

7.  The artificial leather according to any one of claims 1 to 6, wherein the ratio of the polyurethane resin to 100% by mass of the fiber sheet is 5% by mass to 20% by mass.

8. The artificial leather according to any one of claims 1 to 7, wherein a flexibility value thereof is 28 cm or less.

9. The artificial leather according to any one of claims 1 to 8, wherein the polyurethane resin is a water-dispersed polyurethane resin.

10. A method for the production of the artificial leather according to any one of claims 1 to 9, comprising:

   a fiber sheet production step in which the fiber sheet comprising the scrim and the fiber layer (A) is produced, and
   a resin filling step in which the fiber sheet is filled with a polyurethane resin, wherein
   in the fiber sheet production step, at least the fiber layer (A) is produced by a papermaking method.

11. The method according to claim 10, further comprising, prior to the resin filling step, a step in which an outer surface of the fiber layer (A) of the fiber sheet is coated with a hot-water-soluble resin aqueous solution and thereafter dried.

# FIG. 1

# FIG. 2

# FIG. 3A

# FIG. 3B

# FIG. 3C

| | FIELD OF VIEW 1 | FIELD OF VIEW 2 | FIELD OF VIEW 3 |
| PRIOR TO MARKING | | | |
| AFTER MARKING (MARKING RESULTS) | | | |

FIG. 3D

FIG. 3E

## INTERNATIONAL SEARCH REPORT

| International application No. |
| --- |
| PCT/JP2019/030739 |

**A. CLASSIFICATION OF SUBJECT MATTER**

Int. Cl. D06N3/00(2006.01)i, B32B27/12(2006.01)i, B32B27/40(2006.01)i, D06N3/14(2006.01)i

According to International Patent Classification (IPC) or to both national classification and IPC

**B. FIELDS SEARCHED**

Minimum documentation searched (classification system followed by classification symbols)
Int. Cl. D06N1/00-7/06, B32B1/00-43/00

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)
JSTPlus (JDreamIII), JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2017-137588 A (ASAHI KASEI CORP.) 10 August 2017, paragraphs [0001], [0053]-[0060] (Family: none) | 1, 2, 4, 6-10 |
| Y |  | 3, 5, 11 |
| Y | JP 55-84479 A (ASAHI CHEMICAL INDUSTRY CO., LTD.) 25 June 1980, claim 1, column 5, lines 2-5, column 13, line 20 to column 20, line 4 (Family: none) | 3, 11 |
| Y | JP 54-122702 A (ASAHI CHEMICAL INDUSTRY CO., LTD.) 22 September 1979, claims, page 2, upper right column, line 6 to page 4, lower right column, line 11 (Family: none) | 5 |

☒ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26.09.2019 | 08.10.2019 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/030739

C (Continuation).   DOCUMENTS CONSIDERED TO BE RELEVANT

| Category* | Citation of document, with indication, where appropriate, of the relevant passages | Relevant to claim No. |
|---|---|---|
| A | JP 6-293116 A (ASAHI CHEMICAL INDUSTRY CO., LTD.) 21 October 1994, entire document & US 5922445 A | 1-11 |
| A | JP 2001-96658 A (KURARAY CO., LTD.) 10 April 2001, entire document (Family: none) | 1-11 |
| A | Microfilm of the specification and drawings annexed to the request of Japanese Utility Model Application No. 180581/1983 (Laid-open No. 89299/1985) (MITSUBISHI RAYON CO., LTD.) 19 June 1985, entire document (Family: none) | 1-11 |
| A | JP 2004-169197 A (ASAHI KASEI FIBERS CORP.) 17 June 2004, entire document (Family: none) | 1-11 |
| A | JP 2005-60859 A (ASAHI KASEI FIBERS CORP.) 10 March 2005, entire document (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007224481 A
- WO 2015129602 A
- JP 2017137588 A
- JP 2013234409 A